# EUROPÄISCHE PATENTSCHRIFT

(11) **EP 3 475 152 B1**
(45) Veröffentlichungstag und Bekanntmachung des Hinweises auf die Patenterteilung: **24.06.2020**
(21) Anmeldenummer: 17717409.1
(22) Anmeldetag: 12.04.2017
(51) Int. Cl.: B62J 27/00

(54) **VERFAHREN ZUM BETREIBEN EINES ZWEIRADS UND VORRICHTUNG**
METHOD FOR OPERATING A MOTORCYCLE AND MOTORCYCLE
PROCÉDE POUR OPÉRER UN MOTOCYCLE ET MOTOCYCLE

(30) Priorität: 27.06.2016 DE 102016211427
(43) Veröffentlichungstag der Anmeldung: 01.05.2019
(73) Patentinhaber: Robert Bosch GmbH, 70442 Stuttgart (DE)
(72) Erfinder: MOERBE, Matthias, 74360 Ilsfeld-Helfenberg (DE); SCHWABE, Klaus, 83367 Petting (DE)
(86) Internationale Anmeldenummer: PCT/EP2017/058846
(87) Internationale Veröffentlichungsnummer: WO 2018/001588

(56) Entgegenhaltungen:
- EP-A2- 1 097 054
- WO-A1-2009/077264
- DE-A1-102014 225 625
- JP-A- 2001 088 760
- US-A- 6 034 594

## Beschreibung

Die Erfindung betrifft ein Verfahren zum Betreiben eines Zweirads, insbesondere Motorrads, auf einer Fahrbahn.

Ferner betrifft die Erfindung eine Vorrichtung zum Betreiben eines Zweirads und ein Zweirad.

### Stand der Technik

Verfahren zum Betreiben eines Zweirads beziehungsweise Motorrads auf einer Fahrbahn sind aus dem Stand der Technik bekannt. Die Patentschrift EP 1 989 086 B1 offenbart ein Verfahren zur Bestimmung eines Rollwinkels beziehungsweise eines Schräglagewinkels eines Motorrads, um bei Kurvenfahrten ein sicheres Bremsen zu gewährleisten. Der Schräglagewinkel wird dabei einerseits aus einer mittels eines Drehratensensors ermittelten Rollrate und andererseits aus dem Produkt einer Gierrate und einer Fahrgeschwindigkeit des Motorrads bestimmt. Zur Bestimmung des Rollwinkels werden beispielsweise eine Motordrehzahl, eine Raddrehzahl und/oder ein Radschlupf berücksichtigt. Die Offenlegungsschrift DE 10 2012 201 802 A1 offenbart ein Fahrerassistenzsystem, das dazu ausgebildet ist, einen Grenzwert einer von einem Zweirad bei einer Kurvendurchfahrt maximal einzunehmenden Schräglage zu ermitteln. Dazu wird unter Beobachtung eines fahrerspezifischen Fahrverhaltens eine aktuelle Schräglage während einer Kurvenfahrt bestimmt und der Grenzwert für die maximal einzunehmende Schräglage unter Berücksichtigung der aktuellen Schräglage ermittelt. Zudem wird ein Verlauf einer von dem Zweirad zu befahrenden vorausliegenden Kurve ermittelt und eine einzunehmende Schräglage in der vorausliegenden Kurve prognostiziert. Wenn die prognostizierte Schräglage größer ist als die voraussichtlich von einem Fahrer des Zweirads gefahrene Schräglage, wird ein optisches oder akustisches Warnsignal ausgegeben. DE 102 35 378 B4 zeigt ein Verfahren zur Bremsenregelung für ein Zweirad. Dabei wird mittels eines Gierratensensors eine Seitenneigung des Zweirads erfasst, wobei die Bremsenregelung in Abhängigkeit von der erfassten Seitenneigung erfolgt. Es ist vorgesehen, dass mit zunehmendem Neigungswinkel Schlupfschwellenwerte eines Bremsenregelungssystems verringert werden. DE 10 2005 059 216 A1 beschreibt eine Informationseinrichtung für einen Fahrer eines Motorrads, mit der ein Fahrzustand insbesondere bei Kurvenfahrten beschreibbar ist. Dabei ist es vorgesehen, dass eine laufend gemessene, den Fahrzustand beschreibende physikalische Größe einem Vergleich mit einem Referenzwert unterzogen und das Ergebnis dieses Vergleichs dem Fahrer angezeigt wird.

US6034594A zeigt ein Motorrad mit einem mechanischen Schräglagensensor und einer Warnanzeige bei erreichen des Winkels. Die WO 2009/077264A1 zeigt ein Motorrad mit einem Bremsassistenten der einen maximalen Bremswert auf Grundlage der Schräglage und eines Fahrbahnreibwertes ermittelt und anwendet.

### Offenbarung der Erfindung

Erfindungsgemäß ist vorgesehen, das Verfahren mit folgenden Schritten durchzuführen: Ermitteln eines aktuellen Reibwerts zwischen zumindest einem Rad des Zweirads und der Fahrbahn; Berechnen eines kritischen Neigungswinkels des Zweirads in Abhängigkeit zumindest des aktuellen Reibwerts; Erfassen eines aktuellen Neigungswinkels des Zweirads; Bestimmen des Abstands des aktuellen Neigungswinkels zu dem kritischen Neigungswinkel und Ausgeben einer Information an den Fahrer in Abhängigkeit des bestimmten Abstands. Das erfindungsgemäße Verfahren mit den Merkmalen des Anspruchs 1 hat den Vorteil, dass einem Fahrer des Zweirads ein kontrolliertes und sicheres Fahren ermöglicht wird. So ist es aufgrund der ausgegeben Information dem Fahrer möglich, während eines Fahrvorganges sein aktuelles Fahrverhalten an ein physikalisch mögliches Fahrverhalten anzupassen, wobei das physikalisch mögliche Fahrverhalten von dem kritischen Neigungswinkel abhängt. Die Gefahr, dass der Fahrer mit dem Zweirad bei einer Kurvenfahrt einen aktuellen Neigungswinkel fährt, der dem kritischen Neigungswinkel entspricht und somit zu einem Sturz führen kann, wird minimiert. Dies verringert ein Unfallrisiko und erhöht gleichzeitig die Sicherheit sowohl des Fahrers als auch der Verkehrsteilnehmer, die sich in einer Umgebung des Fahrers befinden. Darüber hinaus lernt der Fahrer durch das Verfahren die Möglichkeiten seines Zweirads besser kennen, sodass er seinen Fahrstil optimieren kann.

Gemäß einer bevorzugten Weiterbildung der Erfindung ist vorgesehen, dass der aktuelle Reibwert während eines Beschleunigungs- und/oder Bremsvorgangs ermittelt wird. Der Vorteil hierbei ist, dass der Reibwert somit während eines Fahrvorganges stets aktuell ist beziehungsweise aktualisiert wird. Dies gewährleistet, dass eine aktuelle Fahrbahnbeschaffenheit, wobei die Fahrbahnbeschaffenheit beispielsweise durch eine trockene, nasse oder vereiste Fahrbahn bestimmt ist, und damit der dazugehörige kritische Neigungswinkel stets bekannt sind. Der Reibwert wird bevorzugt mittels eines Algorithmus aus einer Steigung einer insbesondere vorgebbaren Reibwert-Schlupf-Kurve ermittelt. Dabei wird der Schlupf beziehungsweise ein Schlupfwert während des Beschleunigungs- und/oder Bremsvorganges durch eine Bewegung zumindest eines Rades des Zweirads bestimmt. Die Radbewegung wird bevorzugt mittels eines Raddrehzahlsensors bestimmt. Auf der Basis der Gesetzmäßigkeiten des Kamm'schen Kreises wird der für den ermittelten Reibwert mögliche Schräglagewinkelbereich, insbesondere der kritische Neigungswinkel, bestimmt. Der kritische Neigungswinkel ist insbesondere der Neigungswinkel, bei welchem zumindest eines der Räder des Zweirads die Haftung zur Fahrbahn verliert.

Besonders bevorzugt ist vorgesehen, dass dem Fahrer die Information akustisch und/oder haptisch angezeigt wird. Der Vorteil hierbei ist, dass die Information so an den Fahrer ausgegeben wird, dass dieser seine Aufmerksamkeit weiter auf einen Fahrvorgang richten kann. Eine Abwendung des Blickes des Fahrers vom Fahrgeschehen und eine damit verbundene Ablenkung seiner Aufmerksamkeit werden somit vermieden. So ist es beispielsweise möglich, dass ein akustisches Signal über zumindest einen Lautsprecher ausgegeben wird, welcher an dem Zweirad, beispielsweise an einer Instrumententafel des Zweirads, angeordnet ist. Auch ist es möglich, dass die Information dem Fahrer mittels Funk an ein in einem Fahrerhelm integriertes Audiosystem übertragen wird. Dabei wird die akustische Information bevorzugt durch eine zeitliche Folge gleicher Töne angezeigt. Haptisch wird das Signal beispielsweise mittels einer Vibration an einer Motorradkomponente, beispielsweise einer Vibration an zumindest einem Gasgriff, an zumindest einem Bremsgriff oder an einer Sitzbank erzeugt. Auch ist es möglich, dass eine Vibration an einem Ausrüstungsteil des Fahrers, beispielsweise dem Motorradanzug des Fahrers, erzeugt wird.

Besonders bevorzugt ist vorgesehen, dass dem Fahrer die Information optisch angezeigt wird. Der Vorteil hierbei ist, dass der Fahrer die Information durch einen einfachen Blick schnell erfasst. Bevorzugt wird die optische Information auf der Instrumententafel des Motorrads angezeigt. Die optische Information wird bevorzugt mittels eines Leuchtelements, beispielsweise einer LED, dargestellt. Alternativ oder zusätzlich wird die Information vorzugsweise in dem Visier des Fahrerhelms angezeigt, wodurch der Fahrer die Information erhält und gleichzeitig seine Aufmerksamkeit weiterhin auf das Fahrgeschehen richten kann.

Vorzugsweise ist vorgesehen, dass dem Fahrer wenigstens eine Zahl zur Darstellung des bestimmten Abstandes angezeigt wird. Der Vorteil hierbei ist, dass der Fahrer eine konkrete Information über den Abstand erhält. Die Zahl gibt dabei bevorzugt den Abstand beziehungsweise die Differenz aus dem aktuellen Neigungswinkel und dem kritischen Neigungswinkel an. Zusätzlich oder alternativ ist es möglich, den aktuellen Neigungswinkel durch eine erste Zahl und den kritischen Neigungswinkel durch eine zweite Zahl darzustellen.

Besonders bevorzugt ist vorgesehen, dass dem Fahrer wenigstens eine Grafik oder ein Symbol zur Darstellung des bestimmten Abstandes angezeigt wird. Dadurch ergibt sich der Vorteil, dass eine Anzeige der Information für den Fahrer besonders anschaulich wird. Unter den Begriff Grafik fallen Bilder oder auch aus mehreren Bildern zusammengesetzte Sequenzen.

Gemäß einer bevorzugten Weiterbildung der Erfindung ist vorgesehen, dass dem Fahrer der bestimmte Abstand durch wenigstens einen Zustandszeiger und/oder einen Zustandsbalken angezeigt wird. Der Vorteil hierbei ist, dass es dem Fahrer ermöglicht wird, auf einfache Art und Weise eine Übersicht über die Information beziehungsweise den Abstand zu erhalten, insbesondere ohne dabei Zahlen lesen oder auswerten zu müssen. Der Zustandszeiger und/oder der Zustandsbalken bewegen sich bevorzugt innerhalb einer Skala beziehungsweise innerhalb eines Wertebereichs, die/der sich von einem sicheren bis zu einem kritischen Bereich erstreckt. Der Startpunkt des sicheren Bereichs entspricht bevorzugt einer Gleichgewichtsstellung des Zweirads, die es beispielsweise bei einer Geradeausfahrt oder im Stillstand dann einnimmt, wenn die Hochachse des Zweirads parallel zur Richtung der Schwerkraft ausgerichtet ist. Bevorzugt ändern sich ausgehend von dem sicheren Bereich als Startpunkt die Länge des Zustandsbalkens und/oder die Lage des Zustandszeigers in Abhängigkeit des Abstands beziehungsweise der Nähe des aktuellen Neigungswinkels zu dem kritischen Neigungswinkel. Der Zustandsbalken ist bevorzugt als gerader oder gekrümmter Balken, beispielsweise als Kreisringabschnitt, ausgebildet.

Besonders bevorzugt ist vorgesehen, dass dem Zustandsbalken wenigstens ein Zeiger zugeordnet wird, der in Abhängigkeit von dem aktuellen Neigungswinkel und/oder dem bestimmten Abstand entlang des Zustandsbalkens bewegt wird. Der Vorteil hierbei ist, dass der Fahrer zu jedem Zeitpunkt eine Information darüber enthält, wie groß der bestimmte Abstand zum kritischen Neigungswinkel ist, der ein sicheres Fahren gewährleistet. Bevorzugt wird der Zustandsbalken hierbei steif und in der Länge unveränderbar ausgebildet, wobei sich der Zeiger innerhalb des Zustandsbalkens bewegt und den Abstand beziehungsweise die Nähe des aktuellen Neigungswinkels zum kritischen Neigungswinkel anzeigt. Der Startpunkt des Zustandsbalkens entspricht bevorzugt der Gleichgewichtsstellung des Zweirads, der Endpunkt des Zustandsbalkens entspricht bevorzugt dem kritischen Neigungswinkel. Der Zeiger wird bevorzugt als Pfeil oder Punkt ausgebildet.

Besonders bevorzugt ist vorgesehen, dass dem Zustandsbalken eine Skala zugeordnet wird, wobei die Skala bevorzugt als Farbskala in dem Zustandsbalken angezeigt wird. Der Vorteil hierbei ist, dass der Fahrer in Abhängigkeit der Farbe, auf die der Zeiger zeigt, den Abstand zu dem kritischen Neigungswinkel schnell abschätzen kann. Beispielsweise ist innerhalb des Zustandsbalkens der Neutralstellung des Zweirads die Farbe Grün und dem kritischen Neigungswinkel die Farbe Rot zugeordnet. Bevorzugt weist die Farbskala einen kontinuierlichen Farbübergang von Grün zu Rot mit beliebig vielen unterschiedlichen Farben dazwischen auf. Alternativ weist die Skala eine beliebige Anzahl von diskreten Farben auf.

Besonders bevorzugt ist vorgesehen, dass der Zustandsbalken in Abhängigkeit von dem kritischen Neigungswinkel in zumindest zwei Warnstufenabschnitte aufgeteilt wird, wobei jeder Warnstufenabschnitt eine eigene Farbe aufweist. Der Vorteil hierbei ist, dass der Fahrer des Zweirads eine Sturzgefahr direkt an den farblich markierten Warnstufenabschnitten abschätzen kann. Dem Fahrer ist es somit möglich, direkt einzuschätzen, wie sicher sein aktuelles Fahrverhalten ist, so dass es ihm besonders leicht fällt, eine Fahrkorrektur durchzuführen, um mit einem optimalen aktuellen Neigungswinkel eine Kurve zu durchfahren. Dem Fahrer wird somit auch ohne lange Fahrerfahrung ermöglicht, einen optimalen Neigungswinkel bei einer Kurvenfahrt einzunehmen. Die Warnstufenabschnitte sind bevorzugt gleich groß. Alternativ sind die Warnstufenabschnitte unterschiedlich und/oder werden in Abhängigkeit von Randbedingungen, beispielweise einer Aktualisierung des kritischen Neigungswinkels, im Betrieb verändert. Insbesondere wird durch eine Eingabe von Reifenparametern, beispielsweise durch ein Herunterladen der Reifenparameter aus einem externen Rechnernetzwerk, die Größe der Warnstufenabschnitte angepasst. Bevorzugt wird zumindest ein Warnstufenabschnitt mit einem Textfeld beziehungsweise mit einem individuellen Warnkommentar dargestellt.

Die erfindungsgemäße Vorrichtung zum Betreiben eines Zweirads, insbesondere Motorrads, auf einer Fahrbahn, mit den Merkmalen des Anspruchs 11 zeichnet sich durch ein Steuergerät aus, das speziell dazu hergerichtet ist, bei bestimmungsgemäßem Gebrauch das erfindungsgemäße Verfahren durchzuführen. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Das erfindungsgemäße Zweirad mit den Merkmalen des Anspruchs 12 zeichnet sich durch eine Vorrichtung nach Anspruch 11 aus. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Im Folgenden soll die Erfindung anhand der Zeichnungen näher erläutert werden. Dazu zeigen im Folgenden
- Figur 1: ein Zweirad in einer vereinfachten Vorderansicht gemäß einem Ausführungsbeispiel,
- Figur 2: ein Zustandsbalken gemäß einem Ausführungsbeispiel und
- Figur 3: ein Ablaufdiagramm des Verfahrens zum Betreiben des Zweirads.

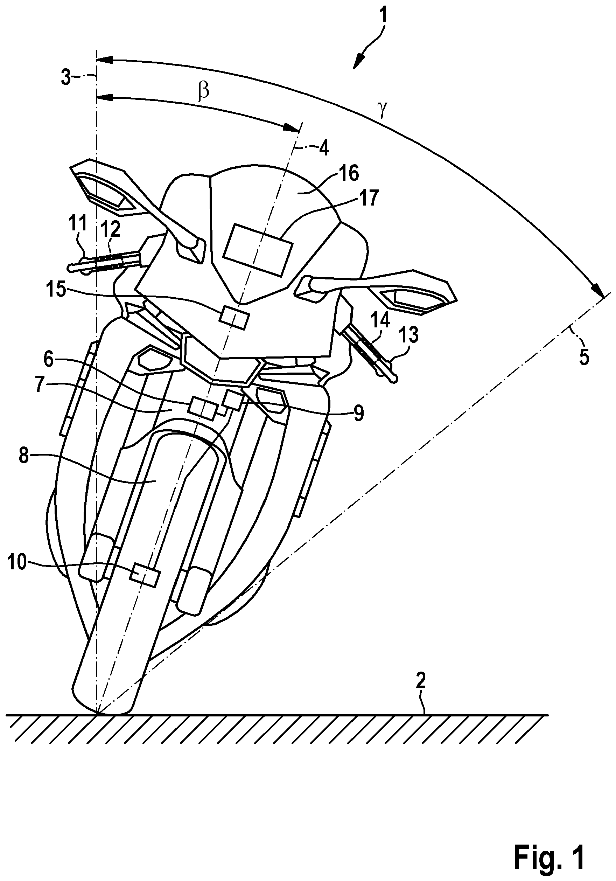

Figur 1 zeigt ein Zweirad 1, insbesondere ein Motorrad, welches auf einer Fahrbahn 2 eine hier nicht dargestellte Kurve durchfährt. Eine Fahrbahnnormale 3 ist senkrecht zu der Fahrbahn 2 angeordnet. Eine Linie markiert die Hochachse 4 des Zweirads 1. Die Hochachse 4 und die Fahrbahnnormale 3 schließen einen Winkel β ein, wobei β einen aktuellen Neigungswinkel des Zweirads 1 angibt. Eine Linie 5 zeigt die Lage einer kritischen Neigung der Hochachse 4 des Zweirads 1 in einer Kurve an, bei welcher das Zweirad 1 die Haftung zur Fahrbahn 2 oder gegebenenfalls auch das Gleichgewicht verliert und auf die Fahrbahn 2 fällt. Der Winkel y, welcher zwischen der Linie 5 und der Fahrbahnnormale 3 liegt, wird daher als kritischer Neigungswinkel γ bezeichnet.

Zur Bestimmung des aktuellen Neigungswinkels β weist das Zweirad 1 bevorzugt einen Sensor 6 auf, welcher vorliegend an einem Schutzblech 7 eines Rades 8, insbesondere eines Vorderrads 8 angeordnet ist. Der Sensor 6 ist beispielsweise ein Drehratensensor und/oder ein Beschleunigungssensor. Die Signale des Sensors 6 werden an ein Steuergerät 9 übertragen und dort ausgewertet.

Das Vorderrad 8 und/oder ein hier nicht gezeigtes Hinterrad des Zweirads 1 weisen jeweils zumindest einen Drehzahlsensor 10 auf, wobei bei jedem Beschleunigungs- oder Bremsvorgang ein aktueller Reibwert zwischen zumindest dem Vorderrad 8 des Zweirads 1 und der Fahrbahn 2 in Abhängigkeit von der jeweils erfassten Drehzahl ermittelt wird. Das Steuergerät 9 empfängt die Signale des Drehzahlsensors 10, um den kritischen Neigungswinkel γ in Abhängigkeit zumindest des aktuellen Reibwerts zu berechnen.

Bevorzugt weist ein Lenkgriff 11 einen Signalgeber 12 und/oder ein Lenkgriff 13 einen Signalgeber 14 auf, wobei der Signalgeber 12, 14 dazu ausgebildet ist, ein Signal zu erzeugen, das von einem Fahrer des Zweirads 1 haptisch wahrnehmbar ist. Als Signalgeber 12, 14 ist bevorzugt eine Vibrationseinrichtung mit einem Vibrationsmotor vorgesehen. Alternativ oder zusätzlich ist es möglich, dass der haptische Signalgeber 12, 14 an einer anderen Stelle des Zweirads 1 angeordnet ist, beispielsweise in einem Bereich eines Fahrersitzes des Zweirads 1.

Alternativ oder zusätzlich weist das Zweirad 1 zumindest einen akustischen Signalgeber 15 auf, welcher bevorzugt in einem Bereich einer Instrumententafel 16 des Zweirads 1 angeordnet ist. Der akustische Signalgeber ist beispielsweise als Lautsprecher ausgebildet. Alternativ ist es möglich, den akustischen Signalgeber 15 in einem Fahrerhelm des Fahrers anzuordnen, wobei dann das Steuergerät 9 und der akustische Signalgeber 15 insbesondere drahtlos über ein externes Datennetzwerk miteinander verbunden sind, beispielsweise über Bluetooth oder WLAN.

Alternativ oder zusätzlich ist vorgesehen, dass im Bereich der Instrumententafel 16 ein optischer Signalgeber 17 angeordnet ist. Der optische Signalgeber 17 ist beispielsweise eine LED.

Das Steuergerät 9 ist bevorzugt dazu ausgebildet, mittels eines Algorithmus einen Abstand Δ des aktuellen Neigungswinkels β zu dem kritischen Neigungswinkel γ zu bestimmen. Dabei steuert das Steuergerät 9 in Abhängigkeit des bestimmten Abstandes die haptischen Signalgeber 12, 14, den akustischen Signalgeber 15 und/oder den optischen Signalgeber 17 an.

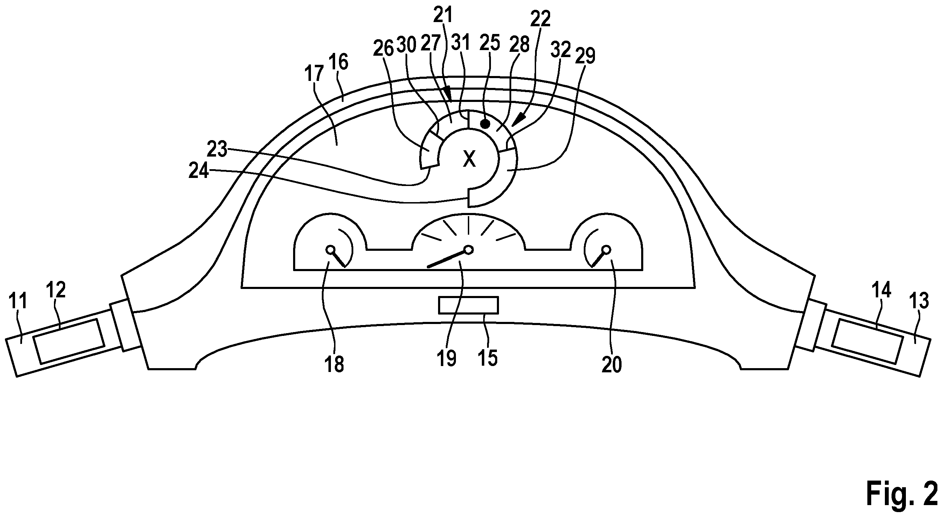

Figur 2 zeigt die Instrumententafel 16 des Zweirads 1 gemäß einem Ausführungsbeispiel. Die Instrumententafel weist den akustischen Signalgeber 15 auf. In einem Display 17 der Instrumententafel 16 sind vorliegend eine Drehzahlanzeige 18, eine Geschwindigkeitsanzeige 19 und eine Motortemperaturanzeige 20 angeordnet. Zudem ist im Display 17 der optische Signalgeber 21 angeordnet, wobei dem Fahrer mittels des optischen Signalgebers 21 die Information bezüglich eines Abstandes Δ des aktuellen Neigungswinkels β zu dem kritischen Neigungswinkel γ angezeigt wird.

Der optische Signalgeber 21 ist vorliegend als Zustandsbalken 22 ausgebildet. Alternativ oder zusätzlich ist es möglich, den optischen Signalgeber 21 in Form eines Zustandszeigers darzustellen.

Der Zustandsbalken 22 ist vorliegend als ein einen Kreisringabschnitt darstellender Zustandsbalken ausgebildet, wobei der Fahrer anhand des Zustandsbalkens 22 eine Information bezüglich des Neigungszustands des Zweirads 1 ablesen kann. Ein Startpunkt des Zustandsbalkens 22 wird an einer ersten Stelle 23 bevorzugt bestimmt durch eine Gleichgewichtsposition des Zweirads 1. Die Gleichgewichtsposition entspricht bevorzugt der Position, die das Zweirad 1 einnimmt, wenn die Hochachse 4 des Zweirads 1 bei einer Geradeausfahrt oder im Stillstand parallel zur Richtung der Schwerkraft, vorliegend zur Richtung der Fahrbahnnormale 3 gemäß Figur 1, ausgerichtet ist. Ein Endpunkt des Zustandsbalkens 22 wird an einer zweiten Stelle 24 bevorzugt bestimmt durch den Wert des kritischen Neigungswinkels γ.

Dem Fahrer wird der bestimmte Abstand Δ vorliegend zum einen in Form einer Zahl X angezeigt. Zum anderen wird dem Fahrer durch einen Zeiger 25, der zwischen den Stellen 23 und 24 angeordnet und dem Zustandsbalken 22 zugeordnet ist, die Lage des Abstandes Δ relativ zu der Gleichgewichtsposition und dem kritischen Neigungswinkel γ angezeigt.

Bevorzugt ist dem Zustandsbalken 22 eine Skala zugeordnet, wobei die Skala vorliegend als Farbskala in dem Zustandsbalken 22 angezeigt wird.

Der Zustandsbalken 22 ist vorliegend in vier Warnstufenabschnitte 26,27,28,29 aufgeteilt. Die Warnstufenabschnitte 26,27,28,29 sind bevorzugt durch Trennlinien 30,31,32 voneinander getrennt, um eine Übersichtlichkeit zu verbessern. Es ist möglich, für jeden Warnstufenabschnitt 26,27,28,29 ein jeweils zugeordnetes Textfeld mit einem dem jeweiligen Warnstufenabschnitt 26,27,28,29 zugeordneten Warnhinweis anzuordnen. Bevorzugt ist vorgesehen, dass den Warnstufenabschnitten 26,27,28,29 jeweils unterschiedliche Farben zugeordnet sind. Dabei wird beispielsweise dem Warnstufenabschnitt 26, welcher einem sicheren Abstand Δ des aktuellen Neigungswinkels β zum kritischen Neigungswinkel γ entspricht, die Farbe Grün zugeordnet. Dem Warnstufenabschnitt 29 welcher einem Abstand Δ entspricht, bei dem Gefahr besteht, dass das Zweirad 1 umkippt, wird beispielsweise die Farbe Rot zugeordnet. Der Farbübergang zwischen Grün und Rot ist bevorzugt kontinuierlich, wobei vorzugsweise beliebig viele weitere Farben zwischen Grün und Rot angeordnet sind.

Durch die Darstellung mittels des Zustandsbalkens 22 wird der Fahrer des Zweirads 1 über sein Fahrverhalten beziehungsweise über den Abstand Δ des aktuellen Neigungswinkels β zu dem kritischen Neigungswinkel γ informiert. Ihm wird somit die Möglichkeit gegeben zu erkennen, wie kritisch der von ihm gefahrene aktuelle Neigungswinkel β ist. Durch die Aufteilung des Zustandsbalkens 22 in verschiedene Warnstufenabschnitte 26,27,28,29 kann der Fahrer eine gefährliche Schrägläge beziehungsweise Neigung des Zweirads 1 erkennen und sein Fahrverhalten entsprechend anpassen.

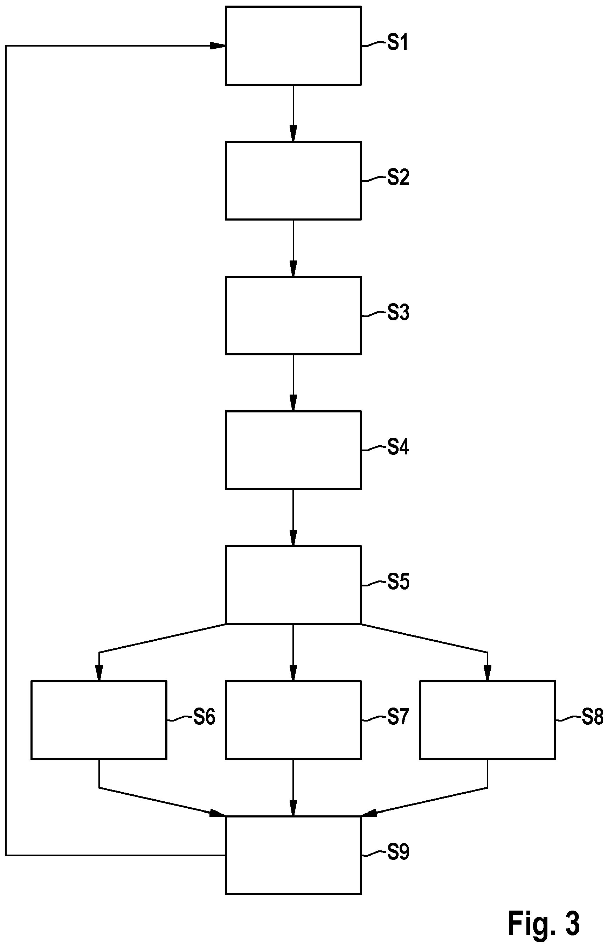

Figur 3 zeigt ein Ablaufdiagramm zur Durchführung des Verfahrens gemäß einem Ausführungsbeispiel.

In einem ersten Schritt S1 wird während eines Beschleunigungs- oder Bremsvorganges ein aktueller Reibwert aus einer Reibkraft zwischen zumindest dem Vorderrad 8 des Zweirads 1 und der Oberfläche der Fahrbahn 2 ermittelt. Zudem wird der Schlupf beziehungsweise ein Schlupfwert durch eine Bewegung zumindest des Vorderrades 8 des Zweirads 1 bestimmt. Die Bewegung des Vorderrads 8 wird bevorzugt mittels eines Drehzahlsensors 10 bestimmt. Aus dem Schlupfwert und dem Reibwert wird ein Wert ermittelt, der den Durchmesser des Kamm'schen Kreises und damit den kritischen Neigungswinkel γ bestimmt.

In einem zweiten Schritt S2 wird in Abhängigkeit zumindest des aktuellen Reibwerts der kritische Neigungswinkel β des Zweirads 1 berechnet. Die Berechnung erfolgt durch das Steuergerät 9 anhand eines Algorithmus, welcher bevorzugt Bestandteil der ESP-, ABS- und/oder Traktionsregelsysteme ist.

In einem Schritt S3 wird der aktuelle Neigungswinkel β des Zweirads 1 erfasst. Die Erfassung erfolgt bevorzugt mittels eines Sensors 6, insbesondere eines Beschleunigungssensors. Der aktuelle Neigungswinkel β wird bevorzugt innerhalb einer vorgebbaren Zeitdauer oder innerhalb eines Bruchteils einer vollen Radumdrehung, beispielsweise einer 1/8 Radumdrehung, bestimmt.

In einem vierten Schritt S4 wird der Abstand Δ des aktuellen Neigungswinkels β zu dem kritischen Neigungswinkel γ durch das Steuergerät 9 bestimmt.

In einem fünften Schritt S5 wird eine Information an den Fahrer des Zweirads 1 in Abhängigkeit des bestimmten Abstands Δ ausgegeben.

Die Information wird dabei in einem Schritt S6 akustisch an den Fahrer übermittelt und angezeigt. Die akustische Anzeige der Information folgt beispielsweise mittels eines Lautsprechers 15, welcher im Bereich der Instrumententafel 16 des Zweirads 1 angeordnet ist. Dabei erfolgt die akustische Anzeige bevorzugt mittels einer Wiedergabe zumindest eines Tons, wobei beispielsweise mit abnehmendem Abstand Δ der zeitliche Abstand zwischen zwei Tönen kürzer wird. Alternativ ist es auch möglich, dass der Ton beziehungsweise die Töne mittels eines Lautsprechers erzeugt werden, wobei sich der Lautsprecher in dem Fahrerhelm des Fahrers befindet.

In einem Schritt S7 wird die Information haptisch an den Fahrer übermittelt und angezeigt. Die haptische Anzeige erfolgt beispielsweise mittels einer Vibration der Lenkstangen 12, 14, der Sitzbank des Zweirads 1 und/oder einer Vibration an einem Teil der Motorradausrüstung des Fahrers. Zur Motorradausrüstung gehört beispielsweise zumindest ein Handschuh oder eine Motorradjacke des Fahrers.

In einem Schritt S8 wird die Information optisch an den Fahrer übermittelt und angezeigt. Die Anzeige der Information erfolgt insbesondere grafisch an der Instrumententafel 16, beispielsweise durch eine LED, deren Helligkeit bevorzugt mit abnehmendem Abstand zwischen dem aktuellen Neigungswinkel β und dem kritischen Neigungswinkel γ zunimmt. Alternativ ist es auch möglich, dass dem Fahrer die Information in dessen Fahrerhelm, insbesondere auf eine Innenseite des Visiers des Fahrerhelmes, projiziert wird. Bevorzugt erfolgt die Anzeige der Information jedoch in einem Bereich der Instrumententafel 16 mittels des Balkendiagramms 22.

Erfasst das Steuergerät 9 in einem neunten Schritt S9, dass das Zweirad 1 beschleunigt oder gebremst wird, so wird das Verfahren bei Schritt S1 fortgesetzt, um den kritischen Neigungswinkel γ neu zu ermitteln.

Bevorzugt wird zumindest einer der Schritte S6, S7 oder S8 ausgeführt.

Indem der Fahrer des Zweirads 1 stets prüfen kann, welchen Abstand Δ der aktuelle Neigungswinkel β zu dem kritischen Neigungswinkel γ aufweist, kann sich Vertrauen in das eigene Fahren aufbauen. Insbesondere lernt der Fahrer dadurch, seinen gegenwärtigen Fahrdynamikbereich zu erkennen und sein Fahrverhalten entsprechend anzupassen. Zudem ermöglicht dies Reaktionen besonders in kritischen Fahrsituationen, die ansonsten erst durch lange Fahrpraxis und dabei erworbene Erfahrungen durchgeführt werden können.

## Patentansprüche

1. Verfahren zum Betreiben eines Zweirads (1), insbesondere Motorrads, auf einer Fahrbahn (2), mit folgenden Schritten:
a) Ermitteln eines aktuellen Reibwerts zwischen zumindest einem Rad (8) des Zweirads (1) und der Fahrbahn (2),
b) berechnen eines kritischen Neigungswinkels (γ) des Zweirads (1) in Abhängigkeit zumindest des aktuellen Reibwerts,
c) erfassen eines aktuellen Neigungswinkels (β) des Zweirads (2),
d) bestimmen des Abstands (Δ) des aktuellen Neigungswinkels (β) zu dem kritischen Neigungswinkel (y),
e) ausgeben einer Information an den Fahrer in Abhängigkeit des bestimmten Abstands (Δ).

2. Verfahren nach Anspruch 1, **dadurch gekennzeichnet, dass** der aktuelle Reibwert während eines Beschleunigungs- oder Bremsvorgangs ermittelt wird.

3. Verfahren nach einem der vorhergehenden Ansprüche, **dadurch gekennzeichnet, dass** dem Fahrer die Information akustisch und/oder haptisch angezeigt wird.

4. Verfahren nach einem der vorhergehenden Ansprüche, **dadurch gekennzeichnet, dass** dem Fahrer die Information optisch angezeigt wird.

5. Verfahren nach Anspruch 4, **dadurch gekennzeichnet, dass** dem Fahrer wenigstens eine Zahl zur Darstellung des bestimmten Abstandes (Δ) angezeigt wird.

6. Verfahren nach Anspruch 4, **dadurch gekennzeichnet, dass** dem Fahrer wenigstens eine Grafik oder ein Symbol zur Darstellung des bestimmten Abstandes (Δ) angezeigt wird.

7. Verfahren nach Anspruch 6, **dadurch gekennzeichnet, dass** dem Fahrer der bestimmte Abstand (Δ) durch wenigstens einen Zustandszeiger und/oder einen Zustandsbalken (22) angezeigt wird.

8. Verfahren nach Anspruch 7, **dadurch gekennzeichnet, dass** dem Zustandsbalken (22) wenigstens ein Zeiger (25) zugeordnet wird, der in Abhängigkeit von dem aktuellen Neigungswinkel (β) und/oder dem bestimmten Abstand (Δ) entlang des Zustandsbalkens (22) bewegt wird.

9. Verfahren nach Anspruch 8, **dadurch gekennzeichnet, dass** dem Zustandsbalken (22) eine Skala zugeordnet wird, wobei die Skala bevorzugt als Farbskala in dem Zustandsbalken (22) angezeigt wird.

10. Verfahren nach einem der Ansprüche 7 oder 8, **dadurch gekennzeichnet, dass** der Zustandsbalken (22) in Abhängigkeit von dem kritischen Neigungswinkel (γ) in zumindest zwei Warnstufenabschnitte (26,27,28,29) aufgeteilt wird, wobei jeder Warnstufenabschnitt (26,27,28,29) eine eigene Farbe aufweist.

11. Vorrichtung zum Betreiben eines Zweirads (1), insbesondere Motorrads, auf einer Fahrbahn (2), **gekennzeichnet durch** ein Steuergerät (9), das speziell dazu hergerichtet ist, bei bestimmungsgemäßem Gebrauch das Verfahren nach einem der Ansprüche 1 bis 10 durchzuführen.

12. Zweirad, insbesondere Motorrad, das zumindest einen Sensor (6) zur Erfassung eines aktuellen Neigungswinkels aufweist, **gekennzeichnet durch** eine Vorrichtung nach Anspruch 11.

## Claims

1. Method for operating a two-wheeled vehicle (1), in particular a motorcycle, on a roadway (2), comprising the following steps:
a) ascertaining a current coefficient of friction between at least one wheel (8) of the two-wheeled vehicle (1) and the roadway (2),
b) calculating a critical tilt angle (γ) of the two-wheeled vehicle (1) in dependence on at least the current coefficient of friction,
c) sensing a current tilt angle (β) of the two-wheeled vehicle (2),
d) determining the distance (Δ) of the current tilt angle (β) from the critical tilt angle (γ),
e) outputting information to the rider in dependence on the determined distance (Δ).

2. Method according to Claim 1, **characterized in that** the current coefficient of friction is ascertained during an accelerating or braking operation.

3. Method according to either of the preceding claims, **characterized in that** the information is indicated to the rider acoustically and/or haptically.

4. Method according to one of the preceding claims, **characterized in that** the information is indicated to the rider optically.

5. Method according to Claim 4, **characterized in that** at least one number is indicated to the rider to represent the distance (Δ) determined.

6. Method according to Claim 4, **characterized in that** at least one graphic or a symbol is indicated to the rider to represent the distance (Δ) determined.

7. Method according to Claim 6, **characterized in that** the distance (Δ) determined is indicated to the rider by at least one status pointer and/or status bar (22) .

8. Method according to Claim 7, **characterized in that** the status bar (22) is assigned at least one pointer (25), which is moved along the status bar (22) in dependence on the current tilt angle (β) and/or the distance (Δ) determined.

9. Method according to Claim 8, **characterized in that** the status bar (22) is assigned a scale, the scale preferably being indicated as a colour scale in the status bar (22).

10. Method according to either of Claims 7 and 8, **characterized in that**, in dependence on the critical tilt angle (γ), the status bar (22) is divided into at least two warning stage segments (26, 27, 28, 29), each warning stage segment (26, 27, 28, 29) having its own colour.

11. Device for operating a two-wheeled vehicle (1), in particular a motorcycle, on a roadway (2), **characterized by** a control unit (9), which is specifically designed for carrying out the method according to one of Claims 1 to 10 during use as intended.

12. Two-wheeled vehicle, in particular a motorcycle, which has at least one sensor (6) for sensing the current tilt angle, **characterized by** a device according to Claim 11.

## Revendications

1. Procédé pour faire fonctionner un deux-roues (1), notamment une motocyclette, sur une chaussée (2), comprenant les étapes suivantes :
a) identification d'un coefficient de frottement actuel entre au moins une roue (8) du deux-roues (1) et la chaussée (2),
b) calcul d'un angle d'inclinaison critique (γ) du deux-roues (1) en fonction du coefficient de frottement actuel,
c) détection d'un angle d'inclinaison actuel (β) du deux-roues (2),
d) détermination de l'écart (Δ) entre l'angle d'inclinaison actuel (β) et l'angle d'inclinaison critique (γ),
e) délivrance d'une information au conducteur en fonction de l'écart (Δ) déterminé.

2. Procédé selon la revendication 1, **caractérisé en ce que** le coefficient de friction actuel est identifié pendant une manœuvre d'accélération ou de freinage.

3. Procédé selon l'une des revendications précédentes, **caractérisé en ce que** l'information est indiquée de manière sonore et/ou haptique au conducteur.

4. Procédé selon l'une des revendications précédentes, **caractérisé en ce que** l'information est indiquée de manière visuelle au conducteur.

5. Procédé selon la revendication 4, **caractérisé en ce qu'**au moins un nombre servant à représenter l'écart (Δ) déterminé est indiqué au conducteur.

6. Procédé selon la revendication 4, **caractérisé en ce qu'**au moins un graphique ou un symbole servant à représenter l'écart (Δ) déterminé est affiché à l'attention du conducteur.

7. Procédé selon la revendication 6, **caractérisé en ce que** l'écart (Δ) déterminé est affiché à l'attention du conducteur par au moins un indicateur d'état et/ou une barre d'état (22).

8. Procédé selon la revendication 7, **caractérisé en ce qu'**au moins un pointeur (25) est associé à la barre d'état (22), lequel est déplacé le long de la barre d'état (22) en fonction de l'angle d'inclinaison actuel (β) et/ou de l'écart (Δ) déterminé.

9. Procédé selon la revendication 8, **caractérisé en ce qu'**une graduation est associée à la barre d'état (22), la graduation étant de préférence affichée sous la forme d'une graduation en couleur dans la barre d'état (22).

10. Procédé selon l'une des revendications 7 et 8, **caractérisé en ce que** la barre d'état (22) est divisée en au moins deux portions de niveau d'alerte (26, 27, 28, 29) en fonction de l'angle d'inclinaison critique (y), chaque portion de niveau d'alerte (26, 27, 28, 29) possédant une couleur propre.

11. Dispositif pour faire fonctionner un deux-roues (1), notamment une motocyclette, sur une chaussée (2), **caractérisé par** un contrôleur (9) qui est spécialement arrangé pour, lors d'un usage conforme à sa destination, mettre en œuvre le procédé selon l'une des revendications 1 à 10.

12. Deux-roues, notamment motocyclette, qui possède au moins un capteur (6) destiné à détecter un angle d'inclinaison actuel, **caractérisé par** un dispositif selon la revendication 11.
